# FASCICULE DE BREVET EUROPEEN

(11) **EP 2 135 775 B1**
(45) Date de publication et mention de la délivrance du brevet: **12.08.2015**
(21) Numéro de dépôt: 09162849.5
(22) Date de dépôt: 16.06.2009
(51) Int. Cl.: B60R 19/12, B60R 19/26, B62D 25/08, B60R 19/18

(54) **Ensemble de pare-chocs et vehicule automobile corespondant**
Stoßstangenanordnung und entsprechendes Kraftfahrzeug
Bumper assembly and corresponding automobile

(30) Priorité: 18.06.2008 FR 0854026
(43) Date de publication de la demande: 23.12.2009
(73) Titulaire: Faurecia Bloc Avant, 92000 Nanterre (FR)
(72) Inventeur: Gonin, Vincent, 25600, Sochaux (FR)
(74) Mandataire: Jacobson, Claude

(56) Documents cités:
- EP-A- 1 293 389
- WO-A-2007/011238
- DE-A1-102006 041 095
- FR-A- 2 875 771
- FR-A- 2 896 222

## Description

La présente invention concerne un ensemble de pare-chocs pour un véhicule automobile comportant, sur chacun de ses côtés droit et gauche, au moins une extrémité de prolonge de berceau et une extrémité de brancard.

Un tel ensemble de pare-chocs est connu, par exemple par le document US 2005/0046226 A1. L'ensemble de pare-chocs comporte une poutre transversale inférieure reliant les extrémités des prolonges de berceau et une poutre transversale supérieure reliant les extrémités des prolonges de brancard. De plus, l'ensemble de pare-chocs comporte un élément déformable d'absorption d'énergie, intercalé entre les deux structures rigides que sont, d'une part, la poutre et, d'autre part, une prolonge de berceau ou un brancard.

Les véhicules automobiles doivent respecter les différentes normes relatives aux chocs. Le pare-chocs doit être apte à absorber l'énergie importante libérée lors d'un choc à haute vitesse (64 km/h) afin de protéger les occupants du véhicule. De plus, le pare-chocs doit remplir cette fonction lors d'un choc avec un véhicule automobile ayant un gabarit différent du gabarit du véhicule considéré.

Dans l'ensemble de pare-chocs connu, la présence des poutres transversales permet de maintenir la cohésion entre les parties droite et gauche de la caisse du véhicule lors d'un choc à haute vitesse. En revanche, il ne permet pas de maintenir la cohésion de la caisse lors d'un choc axial, à vitesse élevée, entre des véhicules ayant des gabarits différents, et/ou lors d'un choc en coin. En effet, au cours de tels chocs, un élément déformable travaille latéralement, ce pour quoi il n'est pas conçu. En conséquence, les poutres transversales sont arrachées de la caisse du véhicule.

De plus, un radiateur étant situé derrière les poutres transversales, lorsque les éléments déformables s'écrasent selon leur épaisseur, les poutres transversales entrent en contact avec le radiateur et le détériorent.

De plus, le document DE 10 2006 041 095 A1 décrit un ensemble avant de véhicule selon le préambule de la revendication 1.

L'invention a pour but de pallier ce problème en proposant un ensemble de pare-chocs amélioré.

Pour cela l'invention porte sur un ensemble de pare-chocs avant pour un véhicule automobile comportant, sur chacun de ses côtés droit et gauche, au moins un élément longitudinal inférieur de structure et un élément longitudinal supérieur de structure. L'ensemble de pare-chocs comporte une structure d'absorption des chocs de haute énergie comportant des platines étendues droite et gauche, chaque platine étant solidaire d'un élément longitudinal inférieur et d'un élément longitudinal supérieur situés du même côté du véhicule ; et des éléments déformables droit et gauche d'absorption des chocs de moyenne énergie, une surface arrière d'un élément déformable prenant appui sur l'essentiel d'une surface avant d'une platine associée.Selon l'invention, l'ensemble de pare-chocs comporte une ossature d'absorption des chocs de faible énergie, l'ossature étant fixée à la structure de sorte que, lors d'un choc, une surface arrière de l'ossature prend appui sur une surface avant des éléments déformables.

Suivant des modes particuliers de l'invention, l'ensemble de pare-chocs comporte une ou plusieurs des caractéristiques suivantes, prises isolément ou suivant toutes les combinaisons techniquement possibles :
- ledit véhicule comportant des éléments longitudinaux supplémentaires droit et gauche, chacune des platines droite et gauche est solidaire des extrémités avant, situées du même côté du véhicule, d'un élément longitudinal inférieur, d'un élément longitudinal supérieur et d'un élément longitudinal supplémentaire ;
- la structure d'absorption des chocs de haute énergie comporte au moins une poutre transversale fixée aux platines droite et gauche ;
- ladite poutre transversale est fixée sur des surfaces arrière des platines droite et gauche, entre la platine et l'extrémité d'un élément longitudinal inférieur, d'un élément longitudinal supérieur ou d'un élément longitudinal supplémentaire ;
- un élément déformable d'absorption d'énergie est constitué par la superposition d'une pluralité de blocs élémentaires d'absorption d'énergie ;
- une surface arrière d'un élément déformable présente au moins un évidement de réception de ladite au moins une poutre transversale, celle-ci étant fixée sur la surface avant de la platine ;
- une surface arrière de l'ossature présente des logements droit et gauche adaptés pour recevoir un élément déformable ;
- ladite ossature comporte des moyens de support d'au moins une pièce parmi une pièce de carrosserie, un accessoire de face avant et une peau de pare-chocs, lesdits moyens de support sont aptes à solidariser de manière amovible ladite au moins une pièce à l'ossature ;
- ledit élément longitudinal inférieur de structure est une prolonge de berceau, et ledit élément longitudinal supérieur de structure est un brancard.

L'invention porte également sur un véhicule automobile dont la face avant est équipée d'un ensemble de pare-chocs tel que celui décrit précédemment.

L'invention et ses avantages seront mieux compris à la lecture de la description qui va suivre, donnée uniquement à titre d'exemple, et faite en se référant aux dessins annexés, dans lesquels :
- la figure 1 est une coupe, selon un plan vertical contenant l'axe longitudinal du véhicule, d'une face avant équipée d'un ensemble de pare-chocs selon un premier mode de réalisation ;
- la figure 2 est une représentation schématique des différentes étapes du montage de l'ensemble de pare-chocs de la figure 1 ; et,
- la figure 3 est une coupe, selon un plan vertical contenant l'axe longitudinal du véhicule, d'une face avant équipée d'un ensemble de pare-chocs selon un second mode de réalisation.

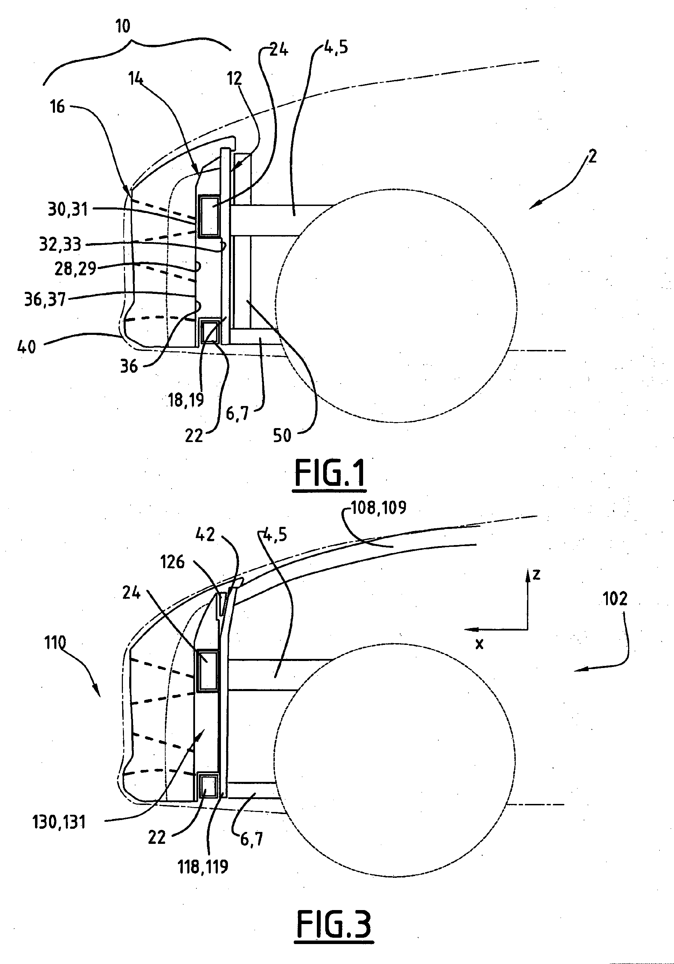

En se référant à la figure 1, une face avant d'un véhicule automobile 2 comporte, dans sa partie supérieure, des brancards droite 4 et gauche 5, et, dans sa partie inférieure, des prolonges de berceau droite 6 et gauche 7.

L'élément de pare-chocs 10 équipant la face avant du véhicule 2 est solidaire des brancards 4 et 5 et des prolonges de berceau 6 et 7. L'élément de pare-chocs 10 comporte successivement, en se déplaçant de l'arrière vers l'avant le long de l'axe longitudinal X du véhicule 2, une structure d'absorption des chocs de haute énergie 12, un moyen d'absorption des chocs d'énergie intermédiaire 14, et une ossature d'absorption des chocs de faible énergie 16.

La structure d'absorption des chocs de haute énergie 12 comporte deux platines, droite 18 et gauche 19. La platine droite 18 est rigide et est par exemple constituée d'un plaque métallique en aluminium ou en acier de forme sensiblement rectangulaire. La platine droite 18, disposée sensiblement verticalement, relie l'extrémité du brancard droite 4 et l'extrémité de la prolonge de berceau droite 6. La platine droite 18 est fixée directement, par vissage ou boulonnage, sur des brides prévues sur les sections d'extrémité des prolonges 4 et 6. La platine droite 18 permet de rigidifier la structure de la caisse du côté droit du véhicule 2. La platine droite 18 présente une surface avant 28 plane et étendue.

Une description similaire peut être faite de la platine 19 reliant l'extrémité du brancard gauche 5 et l'extrémité de la prolonge de berceau gauche 7. La platine gauche 19 permet de rigidifier la structure de la caisse du côté gauche du véhicule 2. La platine gauche 19 présente une surface avant 29 plane et étendue.

La structure 12 comporte également une poutre inférieure 22 et une poutre supérieure 24 qui sont disposées parallèlement à une direction transversale Y de la caisse du véhicule 2. Les poutres transversales 22 et 24 sont rigides et réalisées en métal, par exemple sous la forme d'un profilé d'acier ou d'aluminium. Une poutre transversale 22, 24 est fixée sur chacune des surfaces avant, 28 et 29, des platines 18 et 19. Les poutres transversales 22 et 24 solidarisent les côtés droit et gauche de la caisse du véhicule 2.

Il a été constaté que la liaison rigide et directe, sans interposition d'élément d'absorption d'énergie, entre la prolonge de berceau et le brancard situés d'un même côté du véhicule améliore la raideur en torsion de la caisse et, de manière incidente, améliore le comportement routier du véhicule. De plus, les modes propres de vibration de la caisse sont modifiés de sorte que l'acoustique du véhicule est améliorée.

Ainsi, dans ce mode de réalisation, l'ensemble de pare-chocs comporte une unique structure rigide. Les poutres sont positionnées de manière à être décalées vers l'arrière du véhicule par rapport à leur position dans les faces avant selon l'art antérieur. Ces quelques millimètres de décalage améliorent le porte-à-faux avant du véhicule.

Pour compenser la rigidité accrue conférée par la structure 12 à la caisse du véhicule 2, l'élément de pare-chocs 10 comporte, en avant des platines 18 et 19, un moyen d'absorption des chocs d'énergie intermédiaire 14 et une ossature d'absorption des chocs de faible énergie 16, de manière à respecter les normes relatives aux chocs par exemple du type réparabilité « Danner » ou du type piéton. Ces zones fusibles étant placées à l'avant du véhicule, elles sont facilement accessibles et remplaçables après un choc.

Le moyen d'absorption 14 (dénommé 'crash box » en anglais) comporte deux éléments déformables d'absorption d'énergie, respectivement droit 30 et gauche 31. Ils sont disposés sensiblement verticalement et fixés respectivement à une platine associée parmi les platines 18 et 19. Une surface arrière plane 32, 33 d'un élément déformable 30, 31 prend appui sur l'essentiel de la surface avant 28, 29 de la platine 18, 19 associée. Lors d'un choc, un élément déformable 30, 31 est destiné à s'écraser selon son épaisseur en absorbant une fraction de l'énergie du choc, tout en répartissant les efforts sur la structure 12.

Un élément déformable 30, 31 peut avantageusement présenter une rigidité par unité de surface réduite, puisque la surface d'appui offerte par les platines 18 et 19 est importante.

De préférence, un élément déformable d'absorption d'énergie 30, 31 est réalisé par la superposition, selon une direction verticale Z, d'une pluralité de blocs élémentaires d'absorption d'énergie. Ces blocs élémentaires sont par exemple formés d'un boîtier métallique dont le volume intérieur contient un matériau en nid d'abeille métallique, en mousse d'aluminium, en nid d'abeille polymère, en un matériau structuré en caissons renforcés de nervures, en un matériau thermoplastique expansé, etc.

L'ossature 16 est obtenue par moulage par injection d'un polymère thermoplastique. Elle présente une structure caissonnée ou nervurée de manière à lui conférer une certaine rigidité.

L'ossature 16 est placée contre les éléments déformables d'absorption d'énergie droit 30 et gauche 31, et fixée sur la structure métallique 12. Plus particulièrement, l'ossature 16 est maintenue en position contre les poutres transversales 22 et 24 et/ou contre les platines 18 et 19, par des moyens de fixation. De préférence, ces moyens de fixation sont du type clipable de manière à maintenir rigidement l'ossature 16, tout en offrant la possibilité de la démonter facilement, par exemple pour la remplacer après un choc à faible vitesse. En variante, ces moyens de fixation sont du type vis-écrou.

La face arrière 36 de l'ossature 16 présente des logements droit et gauche dans lesquels s'emboîtent une portion avant des éléments déformables droit 30 et gauche 31. L'ossature 16 chevauche ainsi les éléments déformables 30 et 31, de telle sorte que, lors d'un choc, la surface arrière 36 de l'ossature 16 prend appui sur les surfaces avant 34 et 35 des éléments déformables 30 et 31. On notera que, puisque les éléments déformables d'absorption d'énergie sont placés dans des logements, il n'est pas nécessaire qu'ils comportent un boîtier métallique extérieur. Dans ce cas, le logement est rempli, directement, d'un matériau par exemple en nid d'abeille polymère.

L'ossature 16 est conformante à la surface extérieure du véhicule 2. L'ossature 16 porte différentes pièces 40. Il peut s'agir par exemple d'une pièce de carrosserie, d'un accessoire de face avant (projecteurs, calandre, etc.), d'une peau de pare-chocs, etc.

On notera qu'un radiateur et/ou des moyens de production d'air conditionné, indiqués de manière générale par la référence 50 sur la figure 1, sont prévus en arrière de la structure métallique 12. L'ossature 16 présente des orifices pour canaliser un flux d'air adapté au fonctionnement correct de ces équipements.

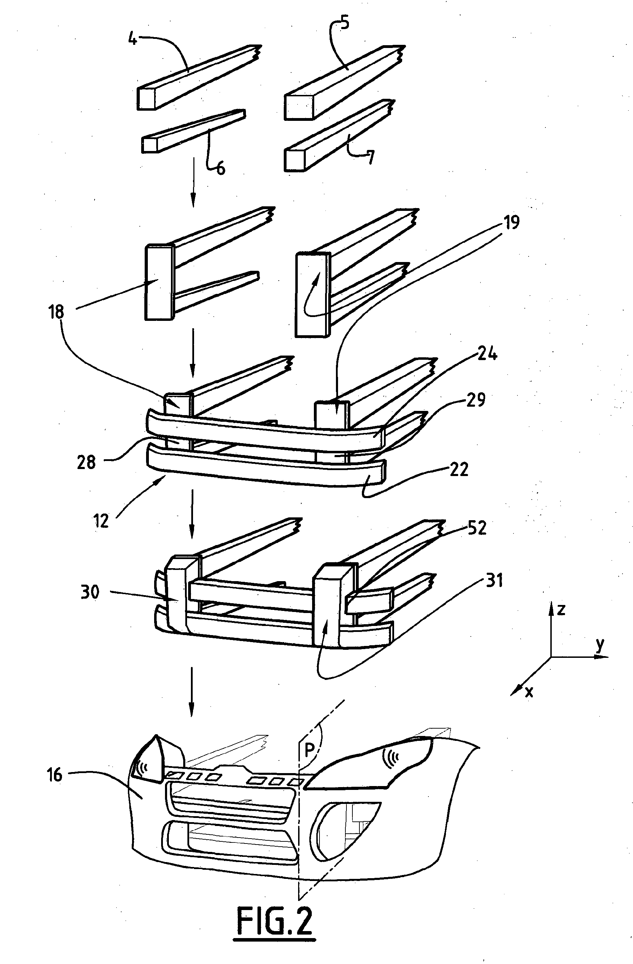

La figure 2 représente schématiquement les étapes du montage de l'ensemble de pare-chocs 10. Ces étapes de montage sont mises en oeuvre successivement sur une chaîne de montage pour réaliser, pièce à pièce, la face avant d'un véhicule, ou de manière à d'abord réaliser un module préassemblé qui sera ensuite approvisionné sur la chaîne de montage pour être assemblé en une seule étape sur un véhicule. La caisse du véhicule 2 présente des prolonges de berceau droite 6 et gauche 7 et des brancards droite 4 et gauche 5. Les platines droite 18 et gauche 19 sont fixées sur les sections d'extrémité planes des prolonges et des brancards. Les platines 18, 19 sont disposées sensiblement verticalement, dans un plan sensiblement transversal. Puis, les poutres transversales 22 et 24 sont fixées sur la surface avant des platines étendues 18 et 19. A l'étape suivante, les éléments déformables 30 et 31 sont fixés, de manière amovible, sur la surface avant 28, 29 de la platine 18, 19 associée. Des évidements 52 ménagés dans la surface arrière 32, 33 d'un élément déformable 30, 31 reçoivent les poutres transversales 22 et 24. L'ossature 16 est ensuite fixée à la structure métallique 12 après avoir emboîté les éléments déformables 30 et 31 dans les logements prévus sur la surface arrière 36 de l'ossature 16. Enfin, les pièces et équipements 40 sont fixés sur la surface extérieure de l'ossature 16.

La figure 3 représente une variante de réalisation de l'élément de pare-chocs selon l'invention pour le cas d'une caisse de véhicule présentant, en plus des prolonges de berceau 6 et 7 et des brancards 4 et 5, des longerons d'aile droit 108 et gauche 109.

Pour rigidifier les côtés droit et gauche de la partie avant de la caisse du véhicule 102, la structure métallique d'absorption des chocs de haute énergie 112 comporte des platines étendues droite 118 et gauche 119. Chaque platine 118, 119 est fixée aux extrémités d'une prolonge de berceau 6, 7, d'un brancard 4, 5 et d'un longeron d'aile 108, 109.

Comme cela est représenté sur la figure 3, la section d'extrémité d'un longeron d'aile 108, 109 étant située en retrait du plan vertical défini par les sections d'extrémité des prolonges 4, 5, et des brancards 6 et 7, une platine 118, 119 comporte une portion inférieure plane, disposée verticalement et solidarisant les extrémités des prolonges de berceau 6, 7 et des brancards 4, 5, et une portion supérieure plane, inclinée vers l'arrière et solidarisant les extrémités d'un brancard 4, 5 et d'un longeron d'aile 108, 109.

La structure 112, en plus des poutres inférieure 22 et supérieure 24, comporte une troisième poutre transversale 126, située en position haute, au-dessus de la poutre supérieure 24. La troisième poutre 126 s'étend d'une platine 118 à l'autre platine 119, et est fixée sensiblement au droit des extrémités des longerons d'aile 108 et 109.

L'élément de pare-chocs 110 présente, en avant des platines étendues 118 et 119, des éléments déformables droit 130 et gauche 131 dont les surfaces arrière prennent respectivement appui sur l'essentiel de la surface avant des platines 118 et 119. En particulier, l'élément déformable 130, 131 présente une partie supérieure adaptée pour qu'il soit en appui sur la portion supérieure inclinée de la platine 118, 119 associée.

Enfin, une ossature 116 conformante à la surface extérieure du véhicule est fixée sur la structure métallique 112 en recouvrant, tout au moins en partie, les éléments déformables 130 et 131.

Alors que dans les modes de réalisation décrits, les poutres transversales sont fixées sur la surface avant des platines, en variante, elles sont fixées sur une surface arrière des platines, entre la platine et l'extrémité d'une prolonge de berceau, d'un brancard ou d'un longeron d'aile, pour pouvoir travailler en compression.

## Revendications

1. Ensemble de pare-chocs avant pour un véhicule automobile comportant, sur chacun de ses côtés droit et gauche, au moins un élément longitudinal inférieur de structure (6, 7) et un élément longitudinal supérieur de structure (4, 5), l'ensemble de pare-chocs comportant une structure (12) d'absorption des chocs de haute énergie comportant des platines étendues droite (18,118) et gauche (19, 119), chaque platine étant solidaire d'un élément longitudinal inférieur et d'un élément longitudinal supérieur situés du même côté du véhicule ; des éléments déformables droit (30, 130) et gauche (31, 131) d'absorption des chocs de moyenne énergie; et, une ossature (16; 116) d'absorption des chocs de faible énergie, **caractérisé en ce qu'**une surface arrière d'un élément déformable prend appui sur l'essentiel d'une surface avant d'une platine associée, et **en ce que** l'ossature est fixée à la structure (12; 112) de sorte que, lors d'un choc, une surface arrière de l'ossature prend appui sur une surface avant des éléments déformables (30, 31 ; 130, 131).

2. Ensemble selon la revendication 1, **caractérisé en ce que**, ledit véhicule comportant des éléments longitudinaux supplémentaires droit et gauche, chacune des platines droite (118) et gauche (119) est solidaire des extrémités avant, situées du même côté du véhicule, d'un élément longitudinal inférieur, d'un élément longitudinal supérieur et d'un élément longitudinal supplémentaire.

3. Ensemble selon l'une quelconque des revendications précédentes, **caractérisé en ce que** la structure d'absorption des chocs de haute énergie (12 ; 112) comporte au moins une poutre transversale (22, 24, 126) fixée aux platines droite (18; 118) et gauche (19; 119).

4. Ensemble selon la revendication 3, **caractérisé en ce que** ladite poutre transversale (22, 24, 126) est fixée sur des surfaces arrière des platines droite (18 ; 118) et gauche (19; 119), entre la platine et l'extrémité d'un élément longitudinal inférieur (6, 7), d'un élément longitudinal supérieur (4, 5) ou d'un élément longitudinal supplémentaire (108, 109).

5. Ensemble selon l'une quelconque des revendications précédentes, **caractérisé en ce qu'**un élément déformable (30, 31 ; 130, 131) d'absorption d'énergie est constitué par la superposition d'une pluralité de blocs élémentaires d'absorption d'énergie.

6. Ensemble selon l'une quelconque des revendications précédentes, **caractérisé en ce qu'**une surface arrière d'un élément déformable (30, 31 ; 130, 131) présente au moins un évidement (52) de réception de ladite au moins une poutre transversale (22, 24, 126), celle-ci étant fixée sur la surface avant de la platine (18, 19 ; 118, 119)

7. Ensemble selon l'une quelconque des revendications précédentes, **caractérisé en ce qu'**une surface arrière de l'ossature (16 ; 116) présente des logements droit et gauche adaptés pour recevoir un élément déformable (30, 31 ; 130, 131).

8. Ensemble selon l'une quelconque des revendications précédentes, **caractérisé en ce que** ladite ossature (16 ; 116) comporte des moyens de support d'au moins une pièce parmi une pièce de carrosserie, un accessoire de face avant et une peau de pare-chocs, lesdits moyens de support sont aptes à solidariser de manière amovible ladite au moins une pièce à l'ossature.

9. Ensemble selon l'une quelconque des revendications précédentes, **caractérisé en ce que** ledit élément longitudinal inférieur de structure est une prolonge de berceau, et ledit élément longitudinal supérieur de structure est un brancard.

10. Ensemble selon l'une quelconque des revendications précédentes, **caractérisé en ce qu'**il comporte successivement, en se déplaçant de l'arrière vers l'avant le long de l'axe destiné à coïncider avec l'axe longitudinal du véhicule, la structure d'absorption des chocs de haute énergie (12), les éléments déformables d'absorption des chocs d'énergie intermédiaire, et l'ossature (16) d'absorption des chocs de faible énergie.

11. Ensemble selon l'une quelconque des revendications précédentes, **caractérisé en ce qu'**il comporte une unique structure d'absorption des chocs de haute énergie.

12. Véhicule automobile dont la face avant est équipée d'un ensemble de parechocs, **caractérisé en ce que** l'ensemble de pare-chocs (10 ; 110) est conforme à l'une quelconque des revendications 1 à 11.

## Patentansprüche

1. Vorderer-Stoßfänger-Einrichtung für ein Kraftfahrzeug aufweisend auf jeder von dessen linken und rechten Seite wenigstens eine unteres Struktur-Längselement (6, 7) und ein oberes Struktur-Längselement (4, 5), wobei die Stoßfänger-Einrichtung aufweist eine Struktur (12) zur Absorption von Stößen hoher Energie, welche sich rechts (18, 118) und links (19, 119) erstreckende Platten aufweist, wobei jede Platte fest mit einem unteren Längselement und einem oberen Längselement verbunden ist, die auf der gleichen Seite des Fahrzeugs angeordnet sind, ein rechtes (30, 130) und ein linkes (31, 131) deformierbares Element zur Absorption von Stößen mittlerer Energie, und ein Gerüst (16; 116) zur Absorption von Stößen schwacher Energie, **dadurch gekennzeichnet, dass** eine hintere Fläche eines deformierbaren Elements sich auf den Hauptteil einer vorderen Fläche einer zugeordneten Platte abstützt, und dass das Gerüst an der Struktur (12; 112) derart befestigt ist, dass, wenn ein Stoß auftritt, eine hintere Fläche des Gerüsts sich auf eine vordere Fläche der deformierbaren Elemente (30, 31; 130, 131) abstützt.

2. Einrichtung gemäß Anspruch 1, **dadurch gekennzeichnet, dass** das Fahrzeug aufweist ein rechtes und ein linkes Hilfs-Längselement, wobei jede von der rechten (118) und der linken Platte (119) mit vorderen, auf der gleichen Seite des Fahrzeugs angeordneten Enden eines unteren Längselements, eines oberen Längselements und eines Hilfs-Längselements verbunden ist.

3. Einrichtung gemäß irgendeinem der vorhergehenden Ansprüche, **dadurch gekennzeichnet, dass** die Struktur zur Absorption von Stößen hoher Energie (12; 112) wenigstens einen Querträger (22, 24, 126) aufweist, der mit der rechten (18; 118) und der linken (19; 119) Platte fest verbunden ist.

4. Einrichtung gemäß Anspruch 3, **dadurch gekennzeichnet, dass** der Querträger (22, 24, 126) an den hinteren Flächen der rechten (18; 118) und der linken (19; 119) Platte zwischen der Platte und dem Ende eines unteren Längselements (6, 7), eines oberen Längselements (4, 5) oder eines Hilfs-Längselements (108, 109) befestigt ist.

5. Einrichtung gemäß irgendeinem der vorhergehenden Ansprüche, **dadurch gekennzeichnet, dass** ein deformierbares Element (30, 31; 130, 131) zur Absorption von Energie gebildet ist durch die Überlagerung einer Mehrzahl von Energieabsorptions-Elementarblöcken.

6. Einrichtung gemäß irgendeinem der vorhergehenden Ansprüche, **dadurch gekennzeichnet, dass** eine hintere Fläche eines deformierbaren Elements (30, 31; 130, 131) wenigstens eine Aussparung (52) zur Aufnahme des wenigstens einen Querträgers (22, 24, 126) aufweist, wobei dieser an der vorderen Fläche der Platte (18, 19; 118, 119) befestigt ist.

7. Einrichtung gemäß irgendeinem der vorhergehenden Ansprüche, **dadurch gekennzeichnet, dass** eine hintere Fläche des Gerüsts (16; 116) eine rechte und eine linke Aufnahme aufweist, die eingerichtet sind zum Aufnehmen eines deformierbaren Elements (30, 31; 130, 131).

8. Einrichtung gemäß irgendeinem der vorhergehenden Ansprüche, **dadurch gekennzeichnet, dass** das Gerüst (16; 116) Mittel zum Halten wenigstens eines Stücks aus einem Karosseriestück, einem Vordere-Stirnseite-Ausstattungsteil und einer Stoßfänger-Schale aufweist, wobei die Mittel zum Halten in der Lage sind, das wenigstens eine Stück in lösbarer Weise an dem Gerüst zu befestigen.

9. Einrichtung gemäß irgendeinem der vorhergehenden Ansprüche, **dadurch gekennzeichnet, dass** das untere Struktur-Längselement eine Verlängerung des Motorträgers ist und das obere Struktur-Längselement ein Bodenlängsträger ist.

10. Einrichtung gemäß irgendeinem der vorhergehenden Ansprüche, **dadurch gekennzeichnet, dass** sie von hinten nach vorne entlang der Achse gehend, die bestimmt ist, um mit der Fahrzeuglängsachse zusammenzufallen, sukzessive aufweist die Struktur zur Absorption von Stößen hoher Energie (12), die deformierbaren Elemente zur Absorption von Stößen mittlerer Energie und das Gerüst (16) zur Absorption von Stößen schwacher Energie.

11. Einrichtung gemäß irgendeinem der vorhergehenden Ansprüchen, **dadurch gekennzeichnet**, sie eine einzige Struktur zur Absorption von Stößen hoher Energie aufweist.

12. Kraftfahrzeug, dessen vordere Stirnseite mit einer Stoßfänger-Einrichtung ausgestattet ist, **dadurch gekennzeichnet, dass** die Stoßfänger-Einrichtung (10; 110) eine gemäß irgendeinem der Ansprüche 1 bis 11 ist.

## Claims

1. Front shock-absorber assembly for a motor vehicle comprising, at each of the right-hand and left-hand sides thereof, at least a lower longitudinal structural element (6, 7) and an upper longitudinal structural element (4, 5), the front shock-absorber assembly comprising a high-energy impact absorption structure (12) which comprises an elongate right-hand plate (18, 118) and an elongate left-hand plate (19, 119), each plate being fixedly joined to a lower longitudinal element and an upper longitudinal element located at the same side of the vehicle; a deformable right-hand element (30, 130) and a deformable left-hand element (31, 131) for absorbing medium-energy impacts; and a framework (16; 116) for absorbing low-energy impacts, **characterised in that** a rear surface of a deformable element being in abutment against the majority of a front surface of an associated plate, and **in that** the framework is fixed to the structure (12; 112) so that, in the event of an impact, a rear surface of the framework moves into abutment against a front surface of the deformable elements (30, 31; 130, 131).

2. Assembly according to claim 1, **characterised in that**, since the vehicle comprises additional right-hand and left-hand longitudinal elements, each of the right-hand plate (118) and left-hand plate (119) is fixedly joined to the front ends, located at the same side of the vehicle, of a lower longitudinal element, an upper longitudinal element and an additional longitudinal element.

3. Assembly according to any one of the preceding claims, **characterised in that** the high-energy impact absorption structure (12; 112) comprises at least a transverse beam (22, 24, 126) which is fixed to the right-hand plate (18, 118) and left-hand plate (19; 119).

4. Assembly according to claim 3, **characterised in that** the transverse beam (22, 24, 126) is fixed to rear surfaces of the right-hand plate (18; 118) and left-hand plate (19; 119), between the plate and the end of a lower longitudinal element (6, 7), an upper longitudinal element (4, 5) or an additional longitudinal element (108, 109).

5. Assembly according to any one of the preceding claims, **characterised in that** a deformable energy absorption element (30, 31; 130, 131) is constituted by the superposition of a plurality of elementary energy absorption units.

6. Assembly according to any one of the preceding claims, **characterised in that** a rear surface of a deformable element (30, 31; 130, 131) has at least one recess (52) for receiving the at least one transverse beam (22, 24, 126), the beam being fixed to the front surface of the plate (18, 19; 118, 119).

7. Assembly according to any one of the preceding claims, **characterised in that** a rear surface of the framework (16; 116) has right-hand and left-hand housings which are capable of receiving a deformable element (30, 31; 130, 131).

8. Assembly according to any one of the preceding claims, **characterised in that** the framework (16; 116) comprises means for supporting at least one component among a body component, a front face accessory and a shock-absorber skin, the support means being capable of fixing the at least one component to the framework in a removable manner.

9. Assembly according to any one of the preceding claims, **characterised in that** the lower longitudinal structural element is a cradle extension and the upper longitudinal structural element is a side sill.

10. Assembly according to any one of the preceding claims, **characterised in that** it comprises successively, when moving from the rear to the front of an axis intended to be confounded with the longitudinal axis of the vehicle, the high-energy impact absorption structure (12), the deformable elements for absorbing medium-energy impacts, and the framework (16) for absorbing low-energy impacts.

11. Assembly according to any one of the preceding claims, **characterised in that** it comprises only one high-energy impact absorption structure.

12. Motor vehicle whose front face is provided with a shock-absorber assembly, **characterised in that** the shock-absorber assembly (10; 110) is in accordance with any one of claims 1 to 11.
